# EUROPÄISCHE PATENTANMELDUNG

(11) **EP 1 736 820 A1**
(43) Veröffentlichungstag der Anmeldung: **27.12.2006**
(21) Anmeldenummer: 06010736.4
(22) Anmeldetag: 24.05.2006
(51) Int. Cl.: G03B 3/10, G01D 5/20

(54) **Fokussiereinrichtung für optische Systeme**

(30) Priorität: 22.06.2005 DE 102005028856
(71) Anmelder: IBAK HELMUT HUNGER GmbH & CO. KG, 24148 Kiel (DE)
(72) Erfinder: Warnecke, Lars, 24107 Kiel (DE); Oeser, Jürgen, 24256 Schlesen (DE); Stock, Markus, 24116 Kiel (DE); Richter, Andreas, 24256 Fargau - Pratjau (DE); Sell, André, 24147 Klausdorf (DE)
(74) Vertreter: Biehl, Christian

(57) **Zusammenfassung**

Optisches System mit Fokussierungseinrichtung (10), mit einem auf einem ferritischen Element (50) angeordneten Permanentmagneten (20) und von einem zwischen dem Permanentmagneten (20) und dem ferritischen Element (50) angeordneten ringförmigen Spalt (60) aufgenommenen Tauchspule (30), einem mit der Tauchspule (30) verbundenen optischen Element (40), das entlang der optischen Achse des optischen Systems verschiebbar gelagert ist, und einer die Tauchspule (30) steuernden Steuereinheit, wobei die Tauchspule (30) mit einer mit einer Wechselspannung überlagerten, die vertikale Position der Tauchspule (30) im Spalt (60) steuernden Gleichspannung beaufschlagt wird, wobei die Steuereinheit zur Messung der vertikalen Position der gleichzeitig als Aktor und als Sensor dienenden Tauchspule (30) im Spalt (60) anhand des Wechselspannungsanteils der an die Tauchspule (30) angelegten Spannung, deren Frequenz ausreichend hoch ist, um keine Bewegung der Spule zu bewirken, eingerichtet ist.

## Beschreibung

Die Erfindung betrifft ein mit einer Fokussierungseinrichtung versehenes optisches System, mit einem aus einem Permanentmagneten und einer den Permanentmagneten umgebenden Tauchspule bestehenden Aktor, einem mit der Tauchspule verbundenen optischen Element, das entlang der optischen Achse des optischen Systems verschiebbar gelagert ist, einem ferritischen Element und einer den Aktor steuernde Steuereinheit. Insbesondere findet die Erfindung Verwendung in miniaturisierten Kamerasystemen, die beispielsweise bei der Inspektion von Rohrleitungen eingesetzt werden können.

Optische Systeme besitzen regelmäßig eine Fokussierungseinheit, die es ermöglicht, ein abzulichtendes oder zu projizierendes Objekt scharf abzubilden. Bei sehr dynamischen Prozessen, die zeitgleich aber auch sehr präzise sein müssen, wird regelmäßig auf optische Elemente der Abbildungsoptik zurückgegriffen, die mittels eines Aktors entlang der optischen Achse des optischen Systems beweglich sind.

Beispielsweise zeigt die DE 10 2004 043 679 A1 ein für die Erstellung von Druckformen geschaffenes optisches System, dessen Linsenposition im Strahlengang mittels eines Aktors verstellbar ist. Die genaue Position der Linse wird dabei über einen Sensor erfasst. Prinzipiell eignet sich dieser Aufbau auch für Kamerasysteme, bei denen die Fokussierung auf eine lichtempfindliche Fläche erfolgen soll.

Der Aufbau dieses bekannten optischen Systems hat jedoch den Nachteil, dass eine Miniaturisierung, beispielsweise für Kamerasysteme in Endoskopen oder Rohrinspektionseinheiten, nur in geringem Umfang erfolgen kann, da eine Positionierungseinheit in Form des Aktors und eine Positionsbestimmungseinheit in Form eines Sensors vorgesehen sein müssen, die einer Miniaturisierung entgegenstehenden Raum einnehmen.

Aufgabe der Erfindung ist es daher, eine Fokussierungseinrichtung für ein optisches System auf der Grundlage eines Aktors zu schaffen, die eine zuverlässige und präzise Positionsbestimmung und Positionierung eines optischen Elementes auf kleinem Raum ermöglicht.

Die Aufgabe wird gelöst durch optisches System mit den Merkmalen des Hauptanspruchs. Die Unteransprüche geben vorteilhafte Ausführungen wieder.

Insbesondere ein mit einer Fokussierungseinrichtung versehenes optisches System, mit einem aus einem Permanentmagneten und einer den Permanentmagneten umgebenen Tauchspule bestehenden Aktor, einem mit der Tauchspule verbunden optischen Element, das entlang der optischen Achse des optischen Systems verschiebbar gelagert ist, einem ferritischem Element und einem den Aktor steuernden Steuereinheit, wobei der Permanentmagnet auf dem ferritischen Element angeordnet ist, wobei ein zwischen dem Permanentmagneten und dem ferritischen Element angeordneter Spalt zur Aufnahme der Tauchspule vorgesehen ist, die Tauchspule mit einer Gleich-/Wechselspannung beaufschlagt ist, und die Steuereinheit zur Bestimmung der vertikalen Position der Tauchspule im Spalt anhand des Wechselspannungsanteils und zur Steuerung der vertikalen Position der Tauchspuie im Spalt anhand des Gleichspannungsanteils eingerichtet ist, hat sich als zuverlässig und präzise erwiesen.

Die Erfindung macht sich die Eigenschaften einer mit einer Gleich- / Wechselspannung beaufschlagten Spule in einem Magnetfeld zu nutze : Zum einen wird die Spule als Aktor genutzt, indem eine Gleichspannung angelegt wird und sich daraufhin ein Magnetfeld bildet, das mit dem vorhandenen Magnetfeld des Permanentmagneten eine Kraft bildet, die auf die Spule wirkt und sie in vertikaler Richtung, d.h. entlang der optischen Achse des optischen Systems, bewegt.

Andererseits wird die Spule gleichzeitig auch als Sensor genutzt, in dem eine Wechselspannung angelegt wird. Der Wechselstrom ist dabei in seiner Amplitude von der Induktivität der Spule abhängig. Die Induktivität der Spule ändert sich, wenn ein ferrititischer Stoff in ihr magnetisches Feld eintaucht. In der erfindungsgemäßen Fokussierungseinrichtung bewegt sich die Spule in einem Ring aus ferritischem Material, wobei ihr magnetisches Feld teilweise, je nach der vertikalen Position der Spule, im Spalt durch das ferritische Element verläuft. Aus der Induktivität der Spule kann so auf die vertikale Position der Spule im Spalt rückgeschlossen werden.

Dadurch, dass die Tauchspule sowohl als Sensor als auch als Aktor genutzt werden kann, wird auf eine räumliche Trennung zwischen Aktor und Sensor verzichtet, so dass das optische System mit geringeren Abmessungen als bisher verwirklicht werden kann.

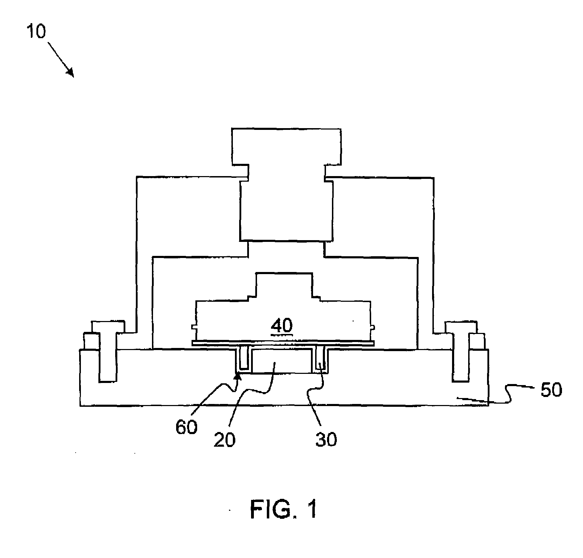

Die Erfindung wird anhand der einzigen Fig. 1 näher erläutert.

Fig. 1 zeigt das erfindungsgemäße optische System in einer geschnittenen, perspektivischen Ansicht. Das optische System besitzt eine optische Fokussierungsseinrichtung 10, die aus einem Aktor, der aus einem Permanentmagneten 20 und einer den Permanentmagneten 20 umgebenen Tauchspule 30 besteht, einem mit der Tauchspule 30 verbunden optischen Element 40, das entlang der optischen Achse des optischen Systems verschiebbar gelagert ist, einem ferritischen Element 50 und einer hier nicht gezeigten, den Aktor steuernden. Steuereinheit.

Bevorzugt ist das optische Element 40 eine Linse oder ein CCD-Sensor, der wie im gezeigten, bevorzugten Beispiel auf einer Führungsplatte angeordnet ist, die mit der Tauchspule 30 verbunden ist.

Bevorzugt wird die Spule mit einer Rechteck-Wechselspannung beaufschlagt, deren Frequenz besonders bevorzugt mindestens 12 kHz beträgt. Die Frequenz der Rechteck-Wechselspannung muss hoch genug sein, damit die Spule nicht beginnt, sich auf und ab zu bewegen, sondern an ihrer gewählten Bewegung verbleibt. Der Spulenstrom wird bevorzugt mit einem Shunt gemessen, wobei der Wechselanteil der Shuntspannung vom Gleichanteil getrennt werden muss, da nur das Wechselsignal die Information über die Position enthält. Zu diesem Zweck wird ein Hochpassfilter verwendet, dessen Grenzfrequenz bevorzugt auf 3 kHz eingestellt ist.

Die isolierte Wechselspannung wird daraufhin gleichgerichtet, verstärkt und dann mit einer Spannung verglichen, die dem Sollwert entspricht. Dieser Sollwert kann über einen Trimmer eingestellt werden. Die entstehende Differenz wird auf einen PI-Regler gegeben, der die Spannung für den Aktor erzeugt. So ergibt sich ein geschlossener Kreis, bei dem die Aktorspannung abhängig von der Position der Spule und dem eingestellten Sollwert ist.

Erfindungsgemäß sieht das optische System mit einer Fokussierungseinrichtung also die Integration von einem Aktor und einem Sensor in einem einzeigen Bauteil vor. Durch die elektrische Ansteuerung und unter Ausnutzung zweier verschiedener elektrischer Effekte, nämlich Elektromagnetismus und Feldlinienkonzentration sind beide Komponenten jedoch unabhängig voneinander nutzbar und zur Positionsbestimmung bzw. zur Positionsregelung von optischen Elementen des optischen Systems verwendbar.

## Patentansprüche

1. Optisches System mit Fokussierungseinrichtung (10), mit einem auf einem ferritischen Element (50) angeordneten Permanentmagneten (20) und von einem zwischen dem Permanentmagneten (20) und dem ferritischen Element (50) angeordneten ringförmigen Spalt (60) aufgenommenen Tauchspule (30), einem mit der Tauchspule (30) verbundenen optischen Element (40), das entlang der optischen Achse des optischen Systems verschiebbar gelagert ist, und einer die Tauchspule (30) steuernden Steuereinheit, wobei die Tauchspule (30) mit einer mit einer Wechselspannung überlagerten, die vertikale Position der Tauchspule (30) im Spalt (60) steuernden Gleichspannung beaufschlagt wird,
**dadurch gekennzeichnet, dass**
die Steuereinheit zur Messung der vertikalen Position der gleichzeitig als Aktor und als Sensor dienenden Tauchspule (30) im Spalt (60) anhand des Wechselspannungsanteils der an die Tauchspule (30) angelegten Spannung, deren Frequenz ausreichend hoch ist, um keine Bewegung der Spule zu bewirken, eingerichtet ist.

2. Optisches System nach Anspruch 1, **dadurch gekennzeichnet, dass** das optische Element (40) eine Linse oder ein CCD-Sensor ist.

3. Optisches System nach einem der vorhergehenden Ansprüche, **dadurch gekennzeichnet, dass** die Wechselspannung eine Rechteck-Wechselspannung ist.

4. Optisches System nach Anspruch 3, **dadurch gekennzeichnet, dass** die Rechteck-Wechselspannung eine Frequenz von mindestens 12 kHz hat.
